# EUROPEAN PATENT SPECIFICATION

(11) **EP 3 375 660 B1**
(45) Date of publication and mention of the grant of the patent: **03.03.2021**
(21) Application number: 18161572.5
(22) Date of filing: 13.03.2018
(51) Int. Cl.: B60N 2/30, B60N 2/005, B60N 2/34, B60P 3/42, B60R 21/02

(54) **COMPARTMENTALIZING A ROAD VEHICLE**
UNTERTEILUNG EINES STRASSENFAHRZEUGS
COMPARTIMENTAGE D'UN VÉHICULE ROUTIER

(30) Priority: 13.03.2017 NL 2018503
(43) Date of publication of application: 19.09.2018
(73) Proprietor: Snoeks Beheer B.V., 2153 GB Nieuw-Vennep (NL)
(72) Inventor: ter STEGE, Wouter, 2182 AE HILLEGOM (NL); van RIJN, Pim, 1055 ED AMSTERDAM (NL)
(74) Representative: EP&C

(56) References cited:
- DE-A1- 19 628 699
- FR-A1- 2 812 591
- GB-A- 2 384 464

## Description

### FIELD OF THE INVENTION

The invention relates to the field of road vehicles, and more specifically to light commercial vehicles, LCVs. In particular, the invention relates to compartmentalizing a road vehicle, using a compartmentalizing device, comprising a furniture member.

### BACKGROUND OF THE INVENTION

In the use of a road vehicle, such as an LCV, different needs may arise over time for specific parts of the interior of the vehicle. The vehicle serves to transport people and goods, where for the same vehicle at one time there may be a need for transporting a larger or smaller group of people, and at another time there may be a need for transporting a higher or lower amount or volume of goods. To adapt to such different requirements, the arrangement of the interior should be flexible.

A known LCV basically comprises three compartments: a cargo space, a crew cab space, and a front cabin. The cargo space is located at the back of the vehicle and is intended to store cargo only. Hinged doors provide access to the cargo space from the back side of the vehicle. The crew cab space is located in the middle of the vehicle and may be used to store cargo or to accommodate passengers. A sliding door provides access to the crew cab space from a side of the vehicle. The front cabin is located at the front of the vehicle, and is for passengers only. A door, such as a hinged or sliding door, provides access to the front cabin from the left and/or right side of the vehicle.

The crew cab space can be used to transport passengers. For this purpose, passengers seats are provided in the crew cab space, and a separation wall (herein: cargo separation wall) is provided at the back of the crew cab space to separate it physically from the cargo space, in view of the safety of the passengers. The crew cab space, when used for passengers, may form one space with the front cabin.

The crew cab space can also be used to transport cargo. For this purpose, the passengers seats are removed, folded back or down, or stored, the cargo separation wall at the back of the crew cab space is removed, and another separation wall (herein: front cabin separation wall) is installed at the front of the crew cab space, between the crew cab space and the front cabin. Thus, the original cargo space is enlarged by combining it with the crew cab space. Loading and unloading of the crew cab space can be done via the sliding door of the vehicle.

So, the functionalities of the interior, in particular of the crew cab space, can be adapted since the user context is not always the same in different time periods, e.g. commercial use during working hours (need for maximum cargo space), and private use outside working hours, such as in weekends (need for extra passenger seats).

When the crew cab space at one time is used for cargo, but subsequently is to be used for accommodation of passengers, the cargo separation wall must be installed between the crew cab space and the cargo space to protect the passengers in the crew cab space from the cargo possibly moving in the cargo space. At the same time, passenger seats must be made available in the crew cab space. The front cabin separation wall must be removed to combine the passengers areas of the crew cab space and the front cabin.

When the crew cab space at one time is used for passengers, but subsequently is to be used for cargo, the cargo separation wall should be removed, and the passenger seats of the crew cab space should be moved out of the way as much as possible, e.g. by removing them, folding them, or storing them in/under the floor. The front cabin separation wall should be installed.

Such conversions take quite a lot of effort and time, e.g. by connecting/disconnecting the cargo separation wall and the front cabin separation wall, and handling the passengers seats. There is a need to convert the crew cab space more efficiently.

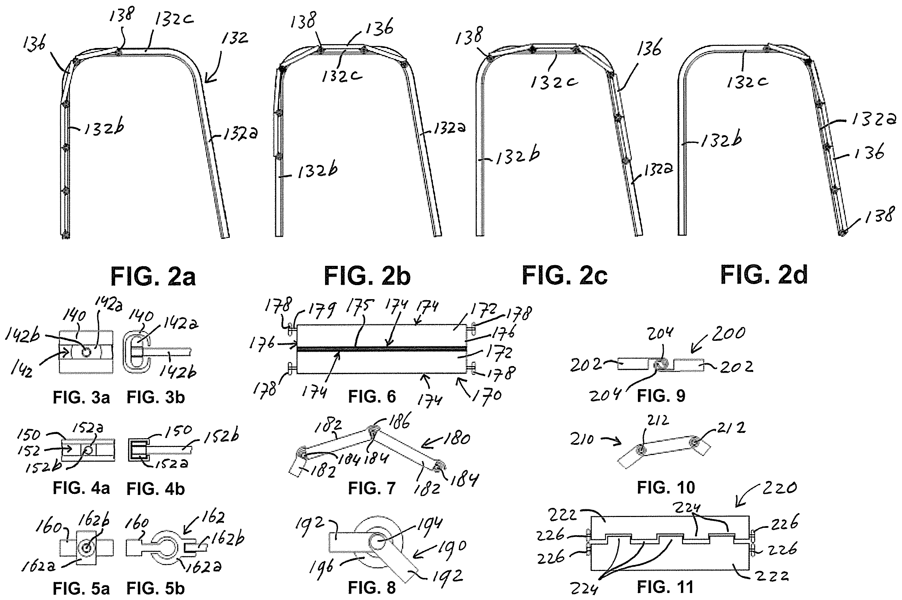

Another example of a flexible interior arrangement of a commercial vehicle can be found in FR 2 812 591 A1. This reference discloses a commercial vehicle wherein the back part of the interior is delimited by back rests of a number of front seats, a roof, side walls, a bottom wall and at least a back door. The back part of the vehicle is provided with a series of transverse supports of which the ends are connected to drive means mounted on the side walls for moving the series of supports between at least two positions. The drive means comprises a two parallel endless chains, one for each side wall, where the ends of the supports are coupled to the chains. The path of each chain comprises a first part extending below, and parallel to the plane of, the roof of the vehicle, a second part adjoining the first part and extending between the roof and the bottom wall of the vehicle, a third part adjoining the second part and extending above, and parallel to the plane of, the bottom wall of the vehicle, a fourth part adjoining the third part and extending from the bottom wall of the vehicle upwards, a fifth part adjoining the fourth part and extending at a small angle with respect to the plane of the roof/bottom wall of the vehicle, a sixth part adjoining the fifth part and extending upwards, and a seventh part adjoining the sixth part and the first part and extending parallel to the first part. As can be seen in Figures 2 to 5 of the reference, (a) the series of supports can be arranged to have the ends thereof positioned at the fifth and sixth parts of the chain paths to form a bench behind the front seats of the vehicle, (b) the series of supports can be arranged to have the ends thereof positioned at the first part of the chain paths to store the supports below the roof of the vehicle, (c) the series of supports can be arranged to have the ends thereof positioned at the second part of the chain paths to form a partition wall behind the front seats of the vehicle and to enlarge the cargo space of the vehicle, and (d) the series of supports can be arranged to have the ends thereof positioned at the second, third and fourth parts of the chain paths to form a trough behind the front seats of the vehicle, respectively.

A disadvantage of the arrangement according to the reference is the provision of endless chains to provide a connection between the ends of the supports, and to position the supports at desired locations.

Disadvantageously, the chains at the third parts of their chain path effectively impede access to the back part of the interior through a side door of the vehicle. Any cargo needs to be lifted across the third parts of the chain paths, and passengers must take care not to stumble over the third parts of the chain paths when crossing them.

Further disadvantageously, chains are complex mechanical structures requiring maintenance and application of friction reducing agents. The chains may damage any cargo contacting them, whether the chains move or are stationary. The chains, whether moving or stationary, further provide a hazard for the safety of passengers, e.g. passengers moving in the vehicle towards and from the bench formed when the series of supports are arranged to have the ends thereof positioned at the fifth and sixth parts of the chain paths. The friction reducing agents may stain any cargo, passengers or their clothes.

A further disadvantage of the arrangement according to the reference is that a comfort of the bench formed when the series of supports are arranged to have the ends thereof positioned at the fifth and sixth parts of the chain paths is quite low, making the bench unsuitable for supporting passengers over larger distances.

DE 19628699 A1 discloses a vehicle including a seat cushion and seat backrest with holders projecting from the side to fit in recesses in the side walls of the vehicle. The seat cushion part and the backrest are pivoted to each other. When stored in an alternative position, at least two locking pins fit in side guide rails, supporting them in the vehicle. A back seat bank can be pushed along the guide rails.

### SUMMARY OF THE INVENTION

It would be desirable to provide a vehicle having an alternative compartmentalizing device. It would also be desirable to provide a vehicle having a compartmentalizing device which is convenient to change the functionality of the interior of the vehicle. It would also be desirable to provide a vehicle having a compartmentalizing device taking up little space in the vehicle. It would also be desirable to provide a vehicle having a compartmentalizing device minimizing hindrance while loading and unloading of cargo and/or passengers. It would further be desirable to provide an alternative compartmentalizing device for a vehicle.

To better address one or more of these concerns, in a first aspect of the invention a road vehicle, such as a light commercial vehicle, LCV, is provided, which comprises a compartmentalizing device, the compartmentalizing device comprising:
at least two spaced and parallel guide rails;
a flexible wall extending between the guide rails, the flexible wall having two opposite side edges and a rear edge portion, the flexible wall at each side edge thereof being provided with guide elements, the guide elements engaging the guide rails to movably guide the flexible wall along the guide rails,
wherein each guide rail has a substantially inverted U-shape forming a guide rail front portion, a guide rail back portion and a guide rail connecting portion connecting an upper end of the guide rail front portion to an upper end of the guide rail back portion;
wherein the flexible wall is movable between a first position and a second position;
wherein the flexible wall in the first position thereof extends at least between the guide rail front portions of the guide rails;
wherein the flexible wall in the second position thereof extends at least between at least a part of the guide rail back portions of the guide rails; and
wherein the road vehicle further comprises a furniture member having a support frame member, the support frame member extending between the guide rails, the support frame member at each side thereof being provided with at least two spaced frame guide elements, the frame guide elements at each side engaging the corresponding guide rail to movably guide the support frame member along the guide rails, wherein the support frame member is connected to the rear edge portion of the flexible wall to be movable along the guide rails together with the flexible wall, and wherein the furniture member is stowed along the guide rail connecting portion in the first position of the flexible wall. The furniture member may be a seat, a bed or a table, or any combination thereof.

The present invention provides a compartmentalizing device, i.e. a device for forming compartments, for use in a vehicle, and the vehicle provided with the compartmentalizing device, wherein the compartmentalizing device has a relatively simple construction which can be easily built into an existing vehicle, or integrated in a design of a vehicle. With the compartmentalizing device, the first space and the second space can have an open connection to each other, whereby for example a passengers cabin comprising front seats in the first space and back seats in the second space can be formed. Alternatively, the second space and the third space can have an open connection to each other, whereby for example a large cargo space comprising the second space and the third space can be formed, separated from the first space.

It is noted that the terms first space, second space and third space each are to be taken to indicate specific parts of the total space available in the vehicle. Boundaries between the first and the second space, and between the second and the third space may be virtual (imaginary) or real. In the former case, there is no physical boundary or wall separating the spaces. In the latter case, there is a physical boundary or wall separating the spaces.

The guide rails, preferably two guide rails, of the compartmentalizing device may be fitted to the side walls or pillars supporting the side walls of the vehicle, where one guide rail is positioned at the left side wall of the vehicle, and another guide rail is positioned at the right side wall of the vehicle. The substantially inverted U-shape of each guide rail advantageously occupies a minimum of space at or near a floor of the vehicle, so that most of the floor surface area in the second space and the third space of the vehicle may remain flat and easily accessible without hindrance when loading or unloading cargo and passengers. In fact, the vehicle floor between the ends of the legs of each guide rail remains completely free, in particular unoccupied by any part of the compartmentalizing device. A transition between the guide rail front portion and the guide rail connecting portion, and a transition between the guide rail back portion and the guide rail connecting portion preferably have a rounded shape to ensure a smooth guiding of the guide elements of the flexible wall.

A length of the flexible wall, as seen along a guide rail, is less than the length of the guide rail. The length may be at least about equal to the length of the guide rail front portion.

The frame guide elements of the support frame member may be embodied identically or similarly to the guide elements of the flexible wall. Advantageously, the furniture member and the flexible wall are interconnected, so that a movement of the flexible wall along the guide rails simultaneously also moves the furniture member along the guide rails. When the rear edge portion of the flexible wall moves upwards along the guide rail back portions, the furniture member also moves up towards the roof of the vehicle. In the movement of the furniture member, the orientation of at least a part thereof may be substantially maintained, whereas the orientation of other parts thereof may be changed, such as folded away to minimize the external dimensions of the furniture member. With an appropriate design of the support frame member, the furniture member may be stowed along the guide rail connecting portion in the first position of the flexible wall, i.e. when the flexible wall separates the first space from the second space of the vehicle. The stowing of the furniture member in an upper part of the second space in the first position of the flexible wall provides a contiguous second and third space of the vehicle with an unobstructed floor space and sufficient loading height for cargo in the second space.

In an embodiment, the road vehicle further comprises a side door at a side of the vehicle for opening and closing a door opening having a left door opening edge, a right door opening edge, an upper door opening edge, and a lower door opening edge, wherein one of the guide rails extends along the left door opening edge, the upper door opening edge and the right door opening edge, and does not extend along the lower door opening edge. Here, the side door provides access to the second space of the vehicle. Advantageously, the door opening that can be opened and closed by the side door thus can remain unobstructed as much as possible by the guide rail. In particular, the bottom part of the door opening can remain substantially unobstructed, so that cargo such as a pallet can be loaded into and unloaded from the vehicle easily by sliding it across the floor of the vehicle behind the door opening. Also, passengers do not run a risk of tripping over some obstacle when boarding or alighting the vehicle through the side door. The side door may be at the left side or at the right side of the vehicle, or the vehicle may be provided with a side door both at the left side and the right side of the vehicle.

In an embodiment of the road vehicle, in particular of the compartmentalizing device thereof, the flexible wall comprises a plurality of elongated wall members, each wall member extending between the guide rails and having two opposite longitudinal edges. The wall members are connected to each other to form the wall. Advantageously, the elongated wall members, such as plates or strips, may have a flat surface and/or may be straight for easy and low-cost manufacture thereof, such as by extrusion of metal or plastic materials. Adjacent longitudinal edges of adjacent wall members may contact each other or be spaced from each other. At least one of the wall members may partly overlap an adjacent wall member. In other embodiments, the wall member may be shaped and/or curved and/or profiled to provide additional strength or resistance to impact, and/or to provide optimum room in the first, second or third space of the vehicle. At least one of the wall members may be curved along its length, and/or curved along its width. The wall members may be made to comply with the tests according to ISO standard 27956.

In an embodiment of the road vehicle, in particular of the compartmentalizing device thereof, one or more hinge members connect respective longitudinal edges of adjacent wall members. Advantageously, the hinge members interconnect the wall members of the flexible wall, so that a function of guiding the flexible wall along the guide rails by the guide elements provided at each side edge of the flexible wall may be performed separately from the hinge members.

In an embodiment of the road vehicle, in particular of the compartmentalizing device thereof, the hinge member comprises a flexible material, such as a rubber material, for example a rubber strip connected between adjacent longitudinal edges of adjacent wall members. The flexible material may have elastic properties for an optimum orientation of the wall members relative to each other along a straight section of the guide rails.

In a simple and low-cost embodiment of the road vehicle, in particular of the compartmentalizing device thereof, the flexible wall is made from, or comprises a web of flexible material. The web of flexible material may comprise one or several layers made from different materials, in combination supporting one or multiple functions of the flexible wall, for example strength, impact resistance, wear resistance, wall surface finish, etcetera. The web of flexible material may be embodied as a cover, such as a textile cover, covering at least one side of the flexible wall formed from the elongate wall elements.

In an embodiment of the road vehicle, in particular of the compartmentalizing device thereof, the guide rails each comprise a profiled member having a substantially C-shaped cross-section, wherein the guide elements comprise freely rotatable guide wheels movable in the corresponding guide rail. The freely rotatable guide wheels are mounted in bearings connected to the side edges of the flexible wall. Advantageously, a low friction between the guide elements (guide wheels) and the guide rails is obtained, making a movement of the flexible wall along the guide rails possible with relatively low force.

In another embodiment of the road vehicle, in particular of the compartmentalizing device thereof, the guide rails each comprise a profiled member having a substantially C-shaped cross-section, and wherein the guide elements comprise internal sliding members movable in the corresponding guide rail. The internal sliding members may be hingedly or fixedly connected to the side edges of the flexible wall. Advantageously, the internal sliding members allow for a relatively simple and low-cost guiding of the flexible wall along the guide rails.

In a further embodiment of the road vehicle, in particular of the compartmentalizing device thereof, the guide rails each comprise a profiled member, and wherein the guide elements comprise external sliding members engaging at least partly around the corresponding profiled member. Advantageously, the combination of the profiled member and the external sliding members allows for a relatively simple and low-cost guiding of the flexible wall along the guide rails. The external sliding members may be hingedly or fixedly connected to the side edges of the flexible wall.

In a further embodiment of the road vehicle, in particular of the compartmentalizing device thereof, the furniture member is a seat comprising a back rest portion and a seat portion, wherein the seat portion is fixed to the support frame member. The back rest portion is hingably connected to the seat portion, and the back rest portion is hingably connected to the rear edge portion of the flexible wall. Hinge axes generally extend horizontally. When the seat is in a use position in the second space of the vehicle, the flexible wall is in the second position thereof. Advantageously, when the seat is moved along the guide rail back portion in an upwards direction, the seat portion may maintain its orientation, which normally will be substantially horizontal or slightly tilted, whereas the back rest portion during the movement may be folded towards the seat portion to come to rest on the seat portion, whereby the seat may be stowed in an upper part of the second space of the vehicle in a compact manner, in the first position of the flexible wall.

In a further embodiment of the road vehicle, in particular of the compartmentalizing device thereof, the furniture member is a bed comprising a horizontal resting portion, wherein the resting portion is fixed to the support frame member, and wherein the resting portion is hingably connected to the rear edge of the flexible wall. When the bed is in a use position in the second space of the vehicle, the flexible wall is in the second position thereof. Advantageously, when the bed is moved along the guide rail back portion in an upwards direction when moving the flexible wall towards its first position, the resting portion may maintain its horizontal orientation, whereby the bed may be stowed in an upper part of the second space of the vehicle near the roof of the vehicle, in the first position of the flexible wall.

In a further embodiment of the road vehicle, in particular of the compartmentalizing device thereof, the furniture member is a table comprising a horizontal table portion, wherein the table portion is fixed to the support frame member. The table portion may be hingably connected to the rear edge of the flexible wall. When the table is in a use position in the second space of the vehicle, the flexible wall is in the second position thereof. Advantageously, when the table is moved along the guide rail back portion in an upwards direction when moving the flexible wall towards its first position, the table portion may maintain its horizontal orientation, whereby the table may be stowed in an upper part of the second space of the vehicle near the roof of the vehicle, in the first position of the flexible wall.

In a further embodiment of the road vehicle, in particular of the compartmentalizing device thereof, the furniture member comprises at least one support beam configured to support the furniture member, such as a seat, in particular a seat portion thereof, or a bed, in particular a bed portion thereof, or a table, in particular a table portion thereof, on a bottom surface, a floor, of the vehicle, wherein the support beam is hingably connected to the support frame member at a distance from an imaginary plane through one of the guide rails. In some embodiments, the support beam further may be hingably connected to the rear edge portion of the flexible wall. Advantageously, the support beam provides a further support for the furniture member or part thereof, and ensures its stable and strong position in use of the furniture member. The support provided by the support beam is in addition to the support provided by the support frame member through the guide rails by which it is guided.

In a further embodiment of the road vehicle, in particular of the compartmentalizing device thereof, the support frame member or the flexible wall is connected to a weight compensating member for compensating at least a part of the weight of the furniture member. Advantageously, the flexible wall being connected to the furniture member can be easily moved, such as by hand or by a motor drive, along the guide rails by virtue of the weight compensating member. The weight compensating member may comprise a spring member. The motor drive preferably comprises an electric drive, such as an electric winch, where a cable is wound on a drum rotatably drivable by an electric motor.

In some embodiments, the spring member comprises at least one of a constant force spring, a torsion spring, a linear spring and a gas spring. Advantageously, each one of the torsion spring, the linear spring and the gas spring may provide a varying compensating force depending on the position of the furniture member along the guide rails. Notably, when the furniture member is just moved out of its use position in an upwards direction along the guide rail back portions, this requires the highest compensating force. During the travel upwards of the furniture member, the required compensating force decreases, since an extra, increasing compensating force is generated by the force of gravity acting on an increasing portion of the flexible wall moving down along the guide rail front portions.

In some embodiments, the connection between the support frame member or the flexible wall, and the spring member is made by a cable. Advantageously, the use of the cable provides flexibility in a choice of locating the spring member in the road vehicle.

In a second aspect, the present invention provides a compartmentalizing device for a road vehicle, such as a light commercial vehicle, LCV. The compartmentalizing device comprises: at least two spaced and parallel guide rails; a flexible wall extending between the guide rails, the flexible wall having two opposite side edges and a rear edge portion,, the flexible wall at each side edge thereof being provided with guide elements, the guide elements engaging the guide rails to movably guide the flexible wall along the guide rails. Each guide rail has a substantially inverted U-shape forming a guide rail front portion, a guide rail back portion and a guide rail connecting portion connecting an upper end of the guide rail front portion to an upper end of the guide rail back portion. The flexible wall is movable between a first position in which the flexible wall extends at least between the guide rail front portions of the guide rails, and a second position in which the flexible wall extends at least between at least a part of the guide rail back portions of the guide rails. The compartmentalizing device further comprises a furniture member having a support frame member. The support frame member extends between the guide rails. The support frame member, at each side thereof, is provided with at least two spaced frame guide elements. The frame guide elements at each side engage the corresponding guide rail to movably guide the support frame member along the guide rails. The frame guide elements may be embodied identically or similarly to the guide elements of the flexible wall. The support frame member is connected to the rear edge portion of the flexible wall to be movable along the guide rails together with the flexible wall. The furniture member is stowed along the guide rail connecting portion in the first position of the flexible wall. The furniture member may be a seat, a bed or a table, or any combination thereof.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a schematic side view of a vehicle, in particular a light commercial vehicle, LCV, further indicating an embodiment of a compartmentalizing device mounted in the vehicle.
Figures 2a, 2b, 2c and 2d depict side views, partially in cross-section, of the embodiment of the compartmentalizing device according to Figure 1, with different positions of a flexible wall slidable along wall guides of the compartmentalizing device.
Figures 3a and 3b schematically depict a side view and a cross-sectional view, respectively, of an embodiment of a combination of a guide rail and a guide element.
Figures 4a and 4b schematically depict a side view and a cross-sectional view, respectively, of another embodiment of a combination of a guide rail and a guide element.
Figures 5a and 5b schematically depict a side view and a cross-sectional view, respectively, of a further embodiment of a combination of a guide rail and a guide element.
Figure 6 schematically depicts a top view of a part of an embodiment of a flexible wall provided with guide elements.
Figure 7 schematically depicts a side view of a part of an embodiment of a flexible wall, illustrating an embodiment of elongated wall members.
Figure 8 schematically depicts a side view of a part of an embodiment of a flexible wall, illustrating an embodiment of a hinged connection between elongated wall members.
Figure 9 schematically depicts a side view of a part of an embodiment of a flexible wall, illustrating another embodiment of a hinged connection between elongated wall members.
Figure 10 schematically depicts a side view of a part of an embodiment of a flexible wall, illustrating a further embodiment of a hinged connection between elongated wall members.
Figure 11 schematically depicts a top view of a part of an embodiment of a flexible wall, illustrating still another embodiment of a hinged connection between elongated wall members in combination with guide elements provided on the wall members.
Figures 12a, 12b and 12c schematically depict a side view of an embodiment of a compartmentalizing device according to the present invention, comprising a furniture member embodied as a seat connected to a flexible wall, in different respective positions of the flexible wall and furniture member.
Figures 13a, 13b and 13c schematically depict a side view of an embodiment of a compartmentalizing device according to the present invention, comprising a furniture member embodied as a bed connected to a flexible wall, in different respective positions of the flexible wall and furniture member.
Figures 14a, 14b and 14c schematically depict a side view of an embodiment of a compartmentalizing device according to the present invention, comprising a furniture member embodied as a table connected to a flexible wall, in different respective positions of the flexible wall and furniture member.
Figure 15 schematically depicts, for the embodiment of the compartmentalizing device in side view according to Figures 12a to 12c, a weight compensating member comprising a cable connected between the flexible wall or the furniture member, and an embodiment of a spring member.
Figure 16 schematically depicts, for the embodiment of the compartmentalizing device in side view according to Figures 12a to 12c, a weight compensating member comprising a cable connected between the flexible wall or the furniture member, and another embodiment of a spring member.
Figure 17 schematically depicts, for the embodiment of the compartmentalizing device in side view according to Figures 12a to 12c, a weight compensating member comprising a cable connected between the flexible wall or the furniture member, and a further embodiment of a spring member.
Figure 18 schematically depicts, for the embodiment of the compartmentalizing device in side view according to Figures 12a to 12c, a weight compensating member comprising a constant force spring.
Figure 19 schematically depicts, for the embodiment of the compartmentalizing device in side view according to Figures 12a to 12c, a weight compensating member comprising a cable connected between the flexible wall or the furniture member, and an electric winch.

### DETAILED DESCRIPTION OF EMBODIMENTS

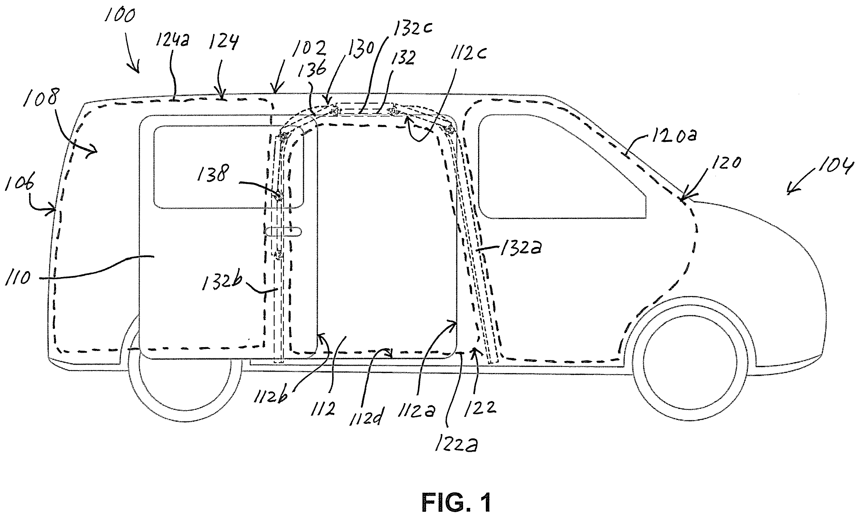

Figure 1 schematically depicts a road vehicle 100, such as a light commercial vehicle, LCV, comprising a top 102, a front 104, a back 106 and a side 108 (only the right side of the vehicle 100 is visible in Figure 1). At the side wall at the side 108, a sliding door 110 is provided to open and close a door opening 112. The door opening 112 has a right door opening edge 112a, a left door opening edge 112b, an upper door opening edge 112c, and a lower door opening edge 112d.

The vehicle 100 comprises a first space 120 near the front 104 of the vehicle 100. The first space 120 is indicated by a dashed line 120a, and comprises a front cabin of the vehicle 100 in which a driver seat and one or more passenger seats may be located. The vehicle 100 further comprises a second space 122 located behind the first space 120, as seen in de forward direction of the vehicle 100. The second space 122 is indicated by a dashed line 122a, and sometimes also is referred to as a crew cab space. The second space 122 may comprise one or more passenger seats, or may be used for cargo after moving any one of the one or more seats. The vehicle 100 further comprise a third space 124 located behind the second space 124, as seen in the forward direction of the vehicle 100. The third space 124 is indicated by a dashed line 124a, and may be a cargo space.

The vehicle 100 further comprises, at its interior, a compartmentalizing device 130. The compartmentalizing device 130 comprises at least two spaced and parallel guide rails 132, at least one on either side of the vehicle 100, arranged near or adjacent or connected to the inner side of the right side wall and the inner side of the left side wall of the vehicle 100. In the side view of Figure 1, only one guide rail 132 is visible, in particular the guide rail 132 arranged at the inner side of the right side wall of the vehicle 100. The guide rail 132 has a substantially inverted U-shaped, and comprises a guide rail front portion 132a, a guide rail back portion 132b and a guide rail connecting portion 132c connecting an upper end of the guide rail front portion 132a and an upper end of the guide rail back portion 132b. The guide rail front portion 132a extends along the right door opening edge 112a, the guide rail back portion 132b extends along the left door opening edge 112b, and the guide rail connecting portion 132c extends along the upper door opening edge 112c. The guide rail 132 leaves the door opening 112 substantially unobstructed. In particular, the guide rail 132 does not extend along the lower door opening edge 112d, and thereby leaves the lower door opening edge 112d unobstructed by virtue of the inverted U-shape of the guide rail 132.

A flexible wall 136 extends between the guide rails 132, and has two opposite side edges. As will be further elucidated below by reference to Figures 2a to 2d, 3a, 3b, 4a, 4b, 5a, 5b, and 6 to 11, the flexible wall 136 at each side edge thereof is provided with guide elements 138, wherein the guide elements 138 engage the guide rails 132 to movably guide the flexible wall 136 along the guide rails 132.

The flexible wall 136 is movable between a first position and a second position. The flexible wall 136 in the first position thereof extends at least between the guide rail front portions 132a of the guide rails 132, whereby the flexible wall 136 separates the first space 120 from the second space 122, and does not separate the second space 122 from the third space 124. The flexible wall 136 in the second position thereof extends at least between at least a part of the guide rail back portions 132b of the guide rails 132, whereby the flexible wall 136 at least partly separates the second space 122 from the third space 124, and does not separate the first space 120 from the second space 122.

In Figure 1, the flexible wall 136 is shown in the second position thereof. In Figures 2a and 2b, the flexible wall 136 is also shown in the second position thereof. In Figure 2c, the flexible wall 136 is shown in between a first position and the second position thereof. In Figure 2d, the flexible wall 136 is shown in a first position thereof.

Figures 3a and 3b depict a part of a guide rail 140 being an elongated profiled member having an essentially C-shaped cross-section. A guide element 142 comprises a guide wheel 142a movable in the guide rail 140. The guide wheel 142a is mounted freely rotatable on a connection member 142b for connecting the guide wheel 142a to a side edge of the corresponding flexible wall. The guide rail 140 comprises a slit through which the connection member 142b extends, and substantially encloses the guide wheel 142a which is confined in the guide rail 140. The cross-sectional dimensions of the guide wheel 142a are smaller than the inner cross-section of the guide rail 140. Thus, in use, only a part of the circumference of the guide wheel 142a contacts an inner wall of the guide rail 140, substantially in a rolling contact with low friction.

Figures 4a and 4b depict a part of a guide rail 150 being an elongated profiled member having an essentially C-shaped cross-section with right angles. A guide element 152 comprises an internal sliding member 152a movable in the guide rail 150. The internal sliding member 152a is mounted on a connection member 152b for connecting the internal sliding member 152a to a side edge of the corresponding flexible wall. The guide rail 150 comprises a slit through which the connection member 152b extends. The cross-sectional dimensions of the internal sliding member 152a are smaller than the inner cross-section of the guide rail 150. Thus, in use, only a part of the outer surface of the internal sliding member 152a contacts an inner wall of the guide rail 150, substantially in a sliding contact with limited friction. The internal sliding member 152a may be freely rotatably mounted to the connection member 152b, or may be hingably mounted to the connection member 152b, or may be fixed to the connection member 152b.

Figures 5a and 5b depict a part of a guide rail 160 being an elongated profiled member having an asymmetric dumb-bell shaped cross-section. A guide element 162 comprises an external sliding member 162a movable on the guide rail 160, and engaging at least partly around a thickened part of the guide rail 160. The external sliding member 162a is mounted on a connection member 162b for connecting the external sliding member 162a to a side edge of the corresponding flexible wall. The connection member 162b comprises a slit through which a part of the guide rail 160 extends. The internal cross-sectional dimensions of the external sliding member 162a are larger than the outer cross-section of the part of the guide rail 160 surrounded by the external sliding member 162a. Thus, in use, only a part of the inner surface of the external sliding member 162a contacts the guide rail 160, substantially in a sliding contact with limited friction. The external sliding member 162a may be freely rotatably mounted to the connection member 162b, or may be hingably mounted to the connection member 162b, or may be fixed to the connection member 162b.

Figure 6 shows a part of a flexible wall 170 comprising a plurality of elongated wall members 172. Each wall member 172 is configured to extend between guide rails, and has two opposite longitudinal edges 174. The flexible wall 170 has side edges 176 provided with guide elements 178 each connected to a wall member 172 by a connection member 179, which guide element 178 and connection member 179 may be embodied like the guide wheel 142a and connection member 142b as shown in Figures 3a, 3b, or like the internal sliding member 152a and connection member 152b as shown in Figures 4a, 4b, or like the external sliding member 162a and connection member 162b as shown in Figures 5a, 5b, or in any other appropriate form.

The wall members 172 are connected at their adjacent longitudinal edges 174 by one or more hinge members 175. The hinge member(s) 175 may comprise a flexible material, such as a rubber material.

Figure 7 illustrates a part of a flexible wall 180 comprising a plurality of elongated wall members 182 interconnected by hinges 184. The wall members 182 are provided with a curved extension 186 along one longitudinal edge thereof, whereby each one of at least some of the wall members 182 partly overlaps an adjacent wall member 182.

In other embodiments, the wall member may be curved along its length, and or along its width.

Figure 8 illustrates a part of a flexible wall 190 comprising a plurality of elongated wall members 192 which are hingably connected around a hinge axis 194. The hinge axis 194 may be connected with, or even be integral with, connection members supporting the guide elements of the flexible wall 190. In the embodiment shown, the guide element may be a guide wheel 196, such as a freely rotatable guide wheel 196.

Figure 9 illustrates a part of a flexible wall 200 comprising a plurality of wall members 202. Two adjacent wall members 202 are hingably connected through curved extensions 204 of the wall members 202 having corresponding, interengaging forms.

Figure 10 illustrates a flexible wall 210 made from a flexible material having elongated support bars 212 extending therein in the width direction of the flexible wall 210. The support bars 212 may form a bending axis around which adjacent parts of the flexible wall 210 bend. The support bars 212 may be connected with, or even be integral with, connection members supporting the guide members of the flexible wall 210.

Figure 11 illustrates a part of a flexible wall 220 comprising a plurality of elongated wall members 222 which are hingably connected to each other through hinges 224 provided at the longitudinal edges of the wall members 222. The flexible wall 220 is provided with guide elements 226 at the side edges of the flexible wall 220. Each wall member 222 may, at each end thereof, be provided with one or more guide elements 226.

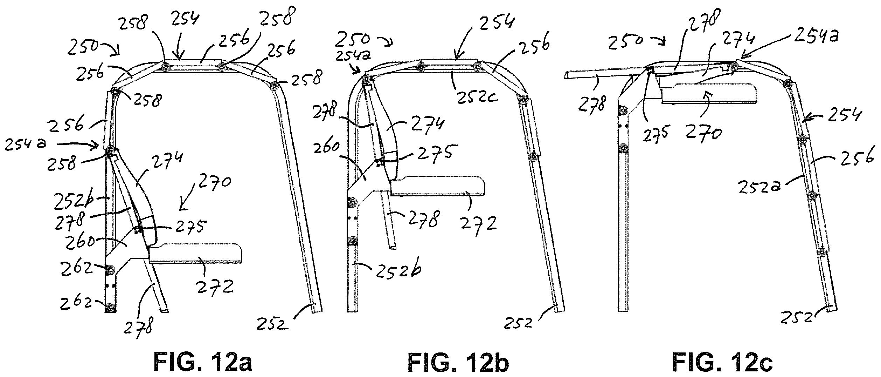

Figures 12a, 12b and 12c illustrate an embodiment of a compartmentalizing device 250 comprising guide rails 252 along which a flexible wall 254 comprising four elongated wall members 256 can be moved between a first position and a second position. The flexible wall 254 is provided with guide elements 258 which engage the guide rails 252 to movably guide the flexible wall 254 along the guide rails 252.

A support frame member 260 extending between the guide rails 252 is provided with two frame guide elements 262 at each side of the frame support member 260. The frame guide elements 262 engage the corresponding guide rail 252 to movably guide the support frame member 260 along the guide rails 252.

The support frame member 260 supports a seat portion 272 of a seat 270. The seat portion 272 may be rigidly connected to the support frame member 260. The seat 270 further comprises a back rest portion 274 being, at its lower side, hingably connected to the support frame member 260, with a hinge axis indicated at 275. At its upper side, the back rest portion 274 is hingably connected to a rear edge portion 254a of the flexible wall 254. Accordingly, the support frame member 260 is connected to the rear edge portion 254a of the flexible wall 254 through the back rest portion 274 to be movable along the guide rails 252 together with the flexible wall 254.

At least one support beam 278, which is configured to support the seat 270 on a bottom surface of a vehicle, is hingably connected to the rear edge portion 254a of the flexible wall 254, and is hingably connected to the support frame member 260 at a distance from an imaginary plane through a guide rail 252, with hinge axis 275. In other embodiments, the support beam 278 may only be hingably connected, directly or indirectly, to the support frame member 260 to be folded away and unfolded whenever necessary.

In Figure 12a, the flexible wall 254 is in its second position, extending between a part of guide rail back portions 252b of the guide rails 252, whereby the flexible wall 254, when mounted in a vehicle, may at least partly separate a second space of the vehicle from a third space of the vehicle, and will not separate a first space of the vehicle from the second space of the vehicle. Here, the seat 270 will be in the second space of the vehicle.

Figure 12b illustrates a sliding of the flexible wall 254 away from its second position to reach an intermediate position in between the first position and the second position of the flexible wall 254. Together and simultaneously with the flexible wall 254, also the support frame member 260 has slid to an intermediate position upwards with respect to the position shown in Figure 12a. As can be seen in Figure 12b, the back rest portion 274 and the support beam 278 have slightly rotated in a clockwise direction for reason of the rear edge portion 254a of the flexible wall 254 moving towards a guide rail connecting portion 252c adjoining the guide rail back portion 252b.

Figure 12c illustrates a further sliding of the flexible wall 254 to be in its first position, extending between guide rail front portions 252a of the guide rails 252, whereby the flexible wall 254 may separate the first space of a vehicle from the second space of the vehicle, and does not separate the second space of the vehicle from the third space of the vehicle. In the first position of the flexible wall 254, the seat 270 is stowed along the guide rail connecting portions 252c of the guide rails 252 in a compact configuration, with the back rest portion 274 folded upon the seat portion 272 of the seat 270. Also, the support beam 278 extends substantially parallel to the guide rail connecting portions 252c.

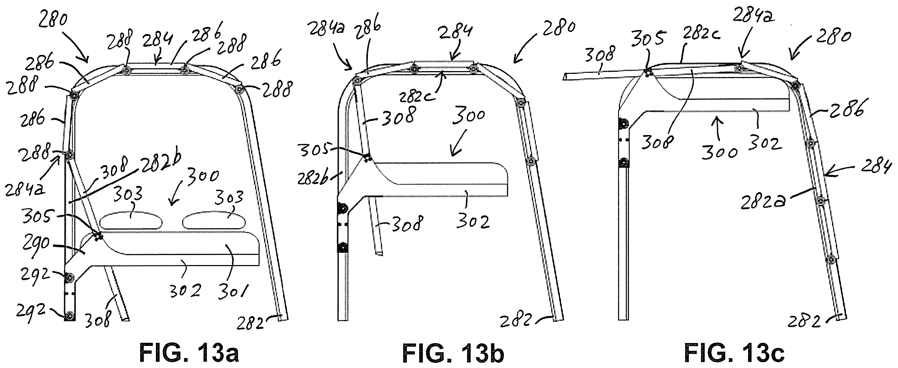

Figures 13a, 13b and 13c illustrate an embodiment of a compartmentalizing device 280 comprising guide rails 282 along which a flexible wall 284 comprising four elongated wall members 286 can be moved between a first position and a second position. The flexible wall 284 is provided with guide elements 288 which engage the guide rails 282 to movably guide the flexible wall 284 along the guide rails 282.

A support frame member 290 extending between the guide rails 282 is provided with two frame guide elements 292 at each side of the frame support member 290. The frame guide elements 292 engage the corresponding guide rail 292 to movably guide the support frame member 290 along the guide rails 282.

The support frame member 290 supports a horizontal resting portion 302 of a bed 300. The horizontal resting portion 302 may be rigidly connected to the support frame member 290. The bed 300 further optionally comprises a mattress 301, blankets, sheets, eiderdown and or cushions 303.

At least one support beam 308, which is configured to support the bed 300 on a bottom surface of a vehicle, is hingably connected to a rear edge portion 284a of the flexible wall 284, and is hingably connected to the support frame member 290 at a distance from an imaginary plane through a guide rail 282, with hinge axis 305. In other embodiments, the support beam 308 may only be hingably connected, directly or indirectly, to the support frame member 290 to be folded away and unfolded whenever necessary.

In Figure 13a, the flexible wall 284 is in its second position, extending between a part of guide rail back portions 282b of the guide rails 282, whereby the flexible wall 284, when mounted in a vehicle, may at least partly separate a second space of the vehicle from a third space of the vehicle, and will not separate a first space of the vehicle from the second space of the vehicle. Here, the bed 300 will be in the second space of the vehicle.

Figure 13b illustrates a sliding of the flexible wall 284 away from its second position to reach an intermediate position in between the first position and the second position of the flexible wall 284. Together and simultaneously with the flexible wall 284, also the support frame member 290 has slid to an intermediate position upwards with respect to the position shown in Figure 13a. As can be seen in Figure 13b, the support beam 308 has slightly rotated in a clockwise direction for reason of the rear edge portion 284a of the flexible wall 284 moving towards a guide rail connecting portion 282c adjoining the guide rail back portion 282b.

Figure 13c illustrates a further sliding of the flexible wall 284 to be in its first position, extending between guide rail front portions 282a of the guide rails 282, whereby the flexible wall 284 may separate the first space of a vehicle from the second space of the vehicle, and does not separate the second space of the vehicle from the third space of the vehicle. In the first position of the flexible wall 284, the bed 300 is stowed along the guide rail connecting portions 282c of the guide rails 282 in a compact configuration. Also, the support beam 308 extends substantially parallel to the guide rail connecting portions 282c.

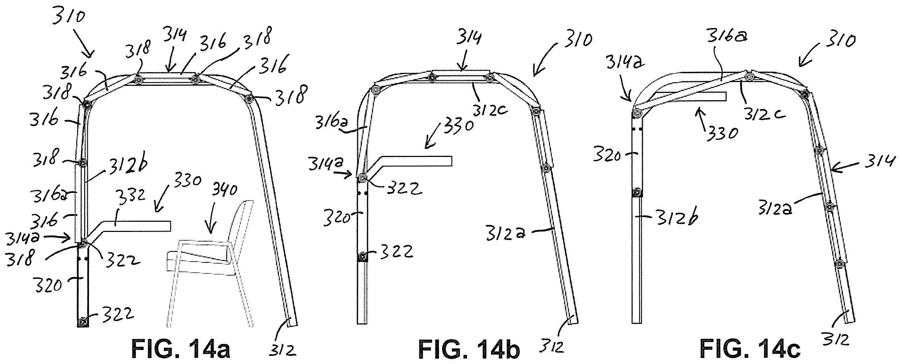

Figures 14a, 14b and 14c illustrate an embodiment of a compartmentalizing device 310 comprising guide rails 312 along which a flexible wall 314 comprising five elongated wall members 316 can be moved between a first position and a second position. Wall member 316a has a greater width than the other wall members 316, but may also have the same or smaller width as the other wall members 316. Other numbers of wall members, depending on their widths, may be used. The flexible wall 314 is provided with guide elements 318 which engage the guide rails 312 to movably guide the flexible wall 314 along the guide rails 312.

A support frame member 320 extending between the guide rails 312 is provided with two frame guide elements 322 at each side of the frame support member 320. The frame guide elements 322 engage the corresponding guide rail 322 to movably guide the support frame member 320 along the guide rails 312.

The support frame member 320 supports a table portion 332 of a table 330. The table portion 332 may be rigidly connected to the support frame member 320. The support frame member 320 is hingably connected to a rear edge portion 314a of the flexible wall 314.

In Figure 14a, the flexible wall 314 is in its second position, extending between a part of guide rail back portions 312b of the guide rails 312, whereby the flexible wall 314, when mounted in a vehicle, may at least partly separate a second space of the vehicle from a third space of the vehicle, and will not separate a first space of the vehicle from the second space of the vehicle. Here, the table 330 will be in the second space of the vehicle. A chair 340 may be used at the table 330.

Figure 14b illustrates a sliding of the flexible wall 314 away from its second position to reach an intermediate position in between the first position and the second position of the flexible wall 314. At the same time, also the support frame member 320, and the table 330 connected to it has slid to an intermediate position upwards with respect to the position shown in Figure 14a.

Figure 14c illustrates a further sliding of the flexible wall 314 to be in its first position, extending between guide rail front portions 312a of the guide rails 312, whereby the flexible wall 314 may separate the first space of a vehicle from the second space of the vehicle, and does not separate the second space of the vehicle from the third space of the vehicle. In the first position of the flexible wall 314, the table 330 is stowed along the guide rail connecting portions 312c of the guide rails 312 in a compact configuration.

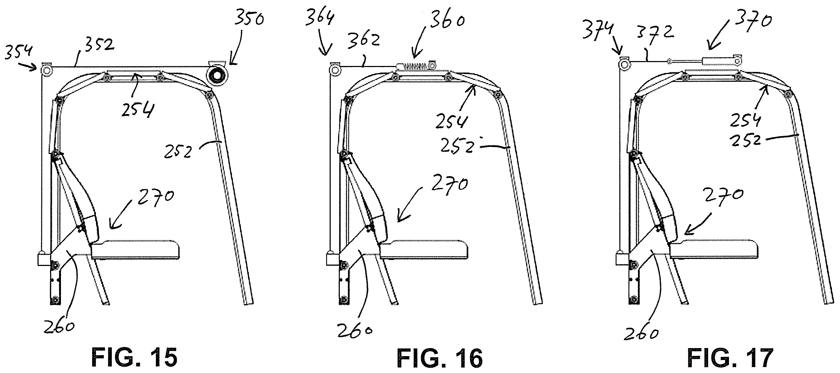

Figure 15 illustrates a similar compartmentalizing arrangement as in Figure 12a. In Figure 15, the support frame member 260 is connected to a spring member 350 through a cable 352. Alternatively, the spring member 350 may be connected to the flexible wall 254 through the cable 352. When built into a vehicle, the path of the cable 352 may be defined using a cable guide 354 which may be embodied as a stationary guide or a freely rotatable guide wheel.

The spring member 350 may be a torsion spring. The spring member 350 compensates at least part of the weight of the seat 270 or other furniture member, such that the flexible wall 254 can be moved along the guide rails 252 with a low effort. A compensating force generated by the spring member 350 may vary depending on the vertical position of the support frame member 260, for example decrease when the height position of the support frame member 260 increases.

Figure 16 illustrates a similar compartmentalizing arrangement as in Figure 12a. In Figure 16, the support frame member 260 is connected to a spring member 360 through a cable 362. Alternatively, the spring member 360 may be connected to the flexible wall 254 through the cable 362. When built into a vehicle, the path of the cable 362 may be defined using a cable guide 364 which may be embodied as a stationary guide or a freely rotatable guide wheel.

The spring member 360 may be a linear spring. The spring member 360 compensates at least part of the weight of the seat 270 or other furniture member, such that the flexible wall 254 can be moved along the guide rails 252 with a low effort. A compensating force generated by the spring member 360 may vary depending on the vertical position of the support frame member 260, for example decrease when the height position of the support frame member 260 increases.

Figure 17 illustrates a similar compartmentalizing arrangement as in Figure 12a. In Figure 17, the support frame member 260 is connected to a spring member 370 through a cable 372. Alternatively, the spring member 370 may be connected to the flexible wall 254 through the cable 372. When built into a vehicle, the path of the cable 372 may be defined using a cable guide 374 which may be embodied as a stationary guide or a freely rotatable guide wheel.

The spring member 370 may be a gas spring. The spring member 370 compensates at least part of the weight of the seat 270 or other furniture member, such that the flexible wall 254 can be moved along the guide rails 252 with a low effort. A compensating force generated by the spring member 370 may vary depending on the vertical position of the support frame member 260, for example decrease when the height position of the support frame member 260 increases.

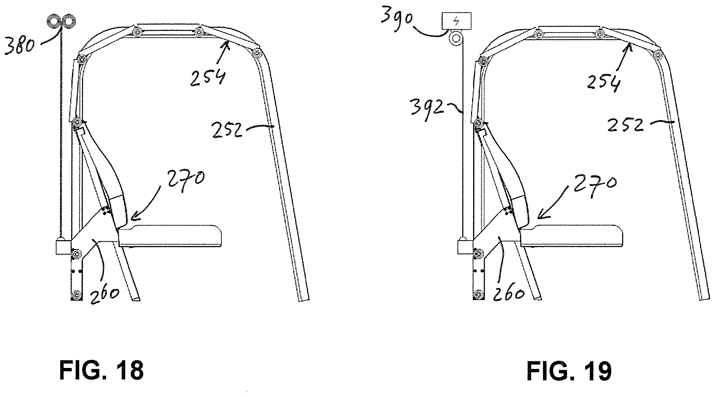

Figure 18 illustrates a similar compartmentalizing arrangement as in Figure 12a. In Figure 18, the support frame member 260 is connected to a constant force spring member 380 to be mounted in a vehicle.

The constant force spring member 380 compensates at least part of the weight of the seat 270 or other furniture member, such that the flexible wall 254 can be moved along the guide rails 252 with a low effort. A compensating force generated by the constant force spring member is substantially constant, independent from the vertical position of the support frame member 260.

Figure 19 illustrates a similar compartmentalizing arrangement as in Figure 12a. In Figure 19, the support frame member 260 is connected to an electric winch 390 comprising a cable 392. When built into a vehicle, the path of the cable 392 may be defined using a cable guide which may be embodied as a stationary guide or a freely rotatable guide wheel.

The electric winch 390 may compensate at least part of the weight of the seat 270 or other furniture member, such that the flexible wall 254 can be moved along the guide rails 252 with a low effort. A compensating force generated by the electric winch 390 may vary depending on the vertical position of the support frame member 260, for example decrease when the height position of the support frame member 260 increases.

Alternatively, the electric winch 390 allows for moving the support frame member 260 and associated seat 270 or other furniture member, and the flexible wall 254 by energizing the electric winch. The support frame member 260 and associated seat 270 thus may be lifted by the electric winch 390. The support frame member 260 and associated seat 270 may be lowered by operating the electric winch in a brake mode.

As an alternative to a weight compensating spring member (passive) or weight compensating electric winch (active), or in addition thereto, in or on the flexible wall, for example at a front edge portion of the flexible wall, opposite to the rear end portion of the flexible wall, a counterweight may be provided to at least partially compensate a weight of a furniture member.

As explained in detail above, a road vehicle comprises a first space, a second space behind the first space, and a third space behind the second space. A compartmentalizing device in the vehicle comprises spaced and parallel inverted U-shaped guide rails and a flexible wall extending between the guide rails. The flexible wall is provided with guide elements engaging the guide rails. In a first position, the flexible wall extends between guide rail front portions for separating the first space from the second space and not separating the second space from the third space. In a second position, the flexible wall extends between at least part of guide rail back portions for at least partly separating the second space from the third space, and not separating the first space from the second space. At least one of the guide rails extends along edges of a side door opening of the vehicle. A furniture member has a support frame member extending between the guide rails, and at each side thereof being provided with at least two spaced frame guide elements at each side engaging the corresponding guide rail to movably guide the support frame member along the guide rails. The support frame member is connected to the rear edge portion of the flexible wall to be movable along the guide rails together with the flexible wall. The furniture member is stowed along the guide rail connecting portion in the first position of the flexible wall.

As required, detailed embodiments of the present invention are disclosed herein. However, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in an appropriately detailed structure.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly.

## Claims

1. A road vehicle (100), such as a light commercial vehicle, LCV, comprising a compartmentalizing device (130; 250; 280; 310), the compartmentalizing device comprising:
at least two spaced and parallel guide rails (132; 252; 282; 312);
a flexible wall (136; 170; 180; 190; 200; 210; 220; 254; 284; 314) extending between the guide rails, the flexible wall having two opposite side edges (176) and a rear edge portion (254a; 284a; 314a), the flexible wall at each side edge thereof being provided with guide elements (138; 178; 226; 258; 262; 288; 318), the guide elements engaging the guide rails to movably guide the flexible wall along the guide rails,
wherein each guide rail has a substantially inverted U-shape forming a guide rail front portion (132a; 252a; 282a; 312a), a guide rail back portion (132b; 252b; 282b; 312b) and a guide rail connecting portion (132c; 252c; 282c; 312c) connecting an upper end of the guide rail front portion to an upper end of the guide rail back portion;
wherein the flexible wall is movable between a first position and a second position;
wherein the flexible wall in the first position thereof extends at least between the guide rail front portions of the guide rails;
wherein the flexible wall in the second position thereof extends at least between at least a part of the guide rail back portions of the guide rails; and
wherein the road vehicle further comprises a furniture member having a support frame member (260; 290; 320), the support frame member extending between the guide rails, the support frame member at each side thereof being provided with at least two spaced frame guide elements (262; 292; 322), the frame guide elements at each side engaging the corresponding guide rail to movably guide the support frame member along the guide rails, wherein the support frame member is connected to the rear edge portion of the flexible wall to be movable along the guide rails together with the flexible wall, and wherein the furniture member is stowed along the guide rail connecting portion in the first position of the flexible wall.

2. The road vehicle according to claim 1, further comprising a side door (110) at a side of the vehicle for opening and closing a door opening (112) having a left door opening edge (112b), a right door opening edge (112a), an upper door opening edge (112c), and a lower door opening edge (112d), wherein one of the guide rails extends along the left door opening edge, the upper door opening edge and the right door opening edge, and does not extend along the lower door opening edge.

3. The road vehicle according to claim 1 or 2, wherein the flexible wall comprises a plurality of elongated wall members (172; 182; 192; 202; 222; 256; 286; 316), each wall member extending between the guide rails and having two opposite longitudinal edges, wherein one or more hinge members (175; 184; 224) connect respective longitudinal edges of adjacent wall members.

4. The road vehicle according to claim 3, wherein at least one of the wall members (182) partly overlaps an adjacent wall member.

5. The road vehicle according to claim 3 or 4, wherein at least one of the wall members is curved along its length, and/or curved along its width.

6. The road vehicle according to claim 1 or 2, wherein the flexible wall is made from, or comprises a web of flexible material.

7. The road vehicle according to any one of the preceding claims, wherein the guide rails each comprise a profiled member, and wherein:
the profiled member (140) has a substantially C-shaped cross-section, wherein the guide elements comprise freely rotatable guide wheels (142a) movable in the corresponding guide rail, or
the profiled member (150) has a substantially C-shaped cross-section, wherein the guide elements comprise internal sliding members (152a) movable in the corresponding guide rail, or
the guide elements comprise external sliding members (162a) engaging at least partly around the corresponding profiled member (160).

8. The road vehicle according to any one of the preceding claims, wherein the furniture member is:
a seat (270) comprising a back rest portion (274) and a seat portion (272), wherein the seat portion is fixed to the support frame member (260), wherein the back rest portion is hingably connected to the seat portion, and wherein the back rest portion is hingably connected to the rear edge portion of the flexible wall, or
a bed (300) comprising a horizontal resting portion, wherein the resting portion is fixed to the support frame member, and wherein the resting portion is hingably connected to the rear edge of the flexible wall, or
a table (330) comprising a horizontal table portion (332), wherein the table portion is fixed to the support frame member (320).

9. The road vehicle according to any one of the preceding claims, wherein the furniture member comprises at least one support beam (278; 308) configured to support the furniture member on a bottom surface of the vehicle, wherein the support beam is hingably connected to the support frame member (260; 290) at a distance from an imaginary plane through one of the guide rails.

10. The road vehicle according to claim 9, wherein the support beam further is hingably connected to the rear edge portion of the flexible wall.

11. The road vehicle according to any one of the preceding claims, wherein the support frame member or the flexible wall is connected to a weight compensating member compensating at least part of the weight of the furniture member.

12. The road vehicle according to claim 11, wherein the weight compensating member comprises a spring member, wherein the spring member in particular comprises at least one of a constant force spring (380), a torsion spring (350), a linear spring (360) and a gas spring (370).

13. The road vehicle according to claim 12, wherein the connection between the support frame member or the flexible wall, and the spring member is made by a cable (352; 362; 372).

14. The road vehicle according to any one of the preceding claims, wherein the support frame member or the flexible wall is connected to a motor drive, in particular an electric motor drive, more in particular an electric winch (390), for moving the flexible wall between the first position and the second position thereof.

15. A compartmentalizing device (130; 250; 280; 310) for a road vehicle (100), such as a light commercial vehicle, LCV, the compartmentalizing device comprising:
at least two spaced and parallel guide rails (132; 252; 282; 312);
a flexible wall (136; 170; 180; 190; 200; 210; 220; 254; 284; 314) extending between the guide rails, the flexible wall having two opposite side edges (176) and a rear edge portion (254a; 284a; 314a), the flexible wall at each side edge thereof being provided with guide elements (138; 178; 226; 258; 262; 288; 318), the guide elements engaging the guide rails to movably guide the flexible wall along the guide rails,
wherein each guide rail has a substantially inverted U-shape forming a guide rail front portion (132a; 252a; 282a; 312a), a guide rail back portion (132b; 252b; 282b; 312b) and a guide rail connecting portion (132c; 252c; 282c; 312c) connecting an upper end of the guide rail front portion to an upper end of the guide rail back portion;
wherein the flexible wall is movable between a first position and a second position;
wherein the flexible wall in the first position thereof extends at least between the guide rail front portions of the guide rails;
wherein the flexible wall in the second position thereof extends at least between at least a part of the guide rail back portions of the guide rails; and
wherein the compartmentalizing device further comprises a furniture member having a support frame member (260; 290; 320), the support frame member extending between the guide rails, the support frame member at each side thereof being provided with at least two spaced frame guide elements (262; 292; 322), the frame guide elements at each side engaging the corresponding guide rail to movably guide the support frame member along the guide rails, wherein the support frame member is connected to the rear edge portion of the flexible wall to be movable along the guide rails together with the flexible wall, and wherein the furniture member is stowed along the guide rail connecting portion in the first position of the flexible wall.

## Patentansprüche

1. Straßenfahrzeug (100), wie ein Kleintransporter, LCV (light commercial vehicle), umfassend eine unterteilende Vorrichtung (130; 250; 280; 310), wobei die unterteilende Vorrichtung Folgendes umfasst:
mindestens zwei beabstandete und parallele Führungsschienen (132; 252; 282; 312);
eine flexible Wand (136; 170; 180; 190; 200; 210; 220; 254; 284; 314), die zwischen den Führungsschienen verläuft, wobei die flexible Wand zwei sich gegenüberliegende Seitenkanten (176) und einen hinteren Kantenabschnitt (254a; 284a; 314a) aufweist, wobei die flexible Wand an jeder ihrer Seitenkanten mit Führungselementen (138; 178; 226; 258; 262; 288; 318) versehen ist, wobei die Führungselemente in die Führungsschienen eingreifen, um die flexible Wand den Führungsschienen entlang beweglich zu führen, wobei jede Führungsschiene eine im Wesentlichen umgekehrte U-Form aufweist, die einen vorderen Führungsschienenabschnitt (132a; 252a; 282a; 312a), einen hinteren Führungsschienenabschnitt (132b; 252b; 282b; 312b) und einen Führungsschienenverbindungsabschnitt (132c; 252c; 282c; 312c), der ein oberes Ende des vorderen Führungsschienenabschnitts mit einem oberen Ende des hinteren Führungsschienenabschnitts verbindet, ausbildet;
wobei die flexible Wand zwischen einer ersten Position und einer zweiten Position beweglich ist; wobei die flexible Wand in ihrer ersten Position mindestens zwischen den vorderen Führungsschienenabschnitten der Führungsschienen verläuft;
wobei die flexible Wand in ihrer zweiten Position mindestens zwischen mindestens einem Teil der hinteren Führungsschienenabschnitte der Führungsschienen verläuft; und
wobei das Straßenfahrzeug ferner ein Mobiliarbauteil mit einem Trägerrahmenbauteil (260; 290; 320) umfasst, wobei das Trägerrahmenbauteil zwischen den Führungsschienen verläuft, wobei das Trägerrahmenbauteil an jeder Seite davon mit mindestens zwei beabstandeten Rahmenführungselementen (262; 292; 322) versehen ist, wobei die Rahmenführungselemente an jeder Seite die entsprechende Führungsschiene angreifen, um das Trägerrahmenbauteil den Führungsschienen entlang beweglich zu führen, wobei das Trägerrahmenbauteil mit dem hinteren Kantenabschnitt der flexiblen Wand verbunden ist, damit dieses zusammen mit der flexiblen Wand den Führungsschienen entlang bewegt werden kann, und wobei das Mobiliarbauteil dem Führungsschienenverbindungsabschnitt entlang in der ersten Position der flexiblen Wand verstaut ist.

2. Straßenfahrzeug nach Anspruch 1, ferner umfassend eine Seitentür (110) an einer Seite des Fahrzeugs zum Öffnen und Schließen einer Türöffnung (112) mit einer linken Türöffnungskante (112b), einer rechten Türöffnungskante (112a), einer oberen Türöffnungskante (112c) und einer unteren Türöffnungskante (112d), wobei eine der Führungsschienen entlang der linken Türöffnungskante, der oberen Türöffnungskante und der rechten Türöffnungskante verläuft und nicht entlang der unteren Türöffnungskante verläuft.

3. Straßenfahrzeug nach Anspruch 1 oder 2, wobei die flexible Wand mehrere längliche Wandbauteile (172; 182; 192; 202; 222; 256; 286; 316) umfasst, wobei jedes Wandbauteil zwischen den Führungsschienen verläuft und zwei sich gegenüberliegende längslaufende Kanten aufweist, wobei ein oder mehrere Scharnierbauteile (175; 184; 224) jeweilige längslaufende Kanten von benachbarten Wandbauteilen verbinden.

4. Straßenfahrzeug nach Anspruch 3, wobei mindestens eines der Wandbauteile (182) ein benachbartes Wandbauteil teilweise überlappt.

5. Straßenfahrzeug nach Anspruch 3 oder 4, wobei mindestens eines der Wandbauteile entlang seiner Länge gekrümmt und/oder entlang seiner Breite gekrümmt ist.

6. Straßenfahrzeug nach Anspruch 1 oder 2, wobei die flexible Wand aus einer flexiblen Materialbahn besteht oder diese umfasst.

7. Straßenfahrzeug nach einem der vorhergehenden Ansprüche, wobei die Führungsschienen jeweils ein profiliertes Bauteil umfassen und wobei:
das profilierte Bauteil (140) einen im Wesentlichen C-förmigen Querschnitt aufweist, wobei die Führungselemente frei rotierbare Führungsräder (142a) umfassen, die in der entsprechenden Führungsschiene bewegt werden können, oder
das profilierte Bauteil (150) einen im Wesentlichen C-förmigen Querschnitt aufweist, wobei die Führungselemente innere Gleitbauteile (152a) umfassen, die in der entsprechenden Führungsschiene bewegt werden können, oder
die Führungselemente äußere Gleitbauteile (162a) umfassen, die mindestens teilweise das entsprechende profilierte Bauteil (160) umgreifen.

8. Straßenfahrzeug nach einem der vorhergehenden Ansprüche, wobei das Mobiliarbauteil Folgendes ist:
ein Sitz (270), der einen Rückenlehnenabschnitt (274) und einen Sitzabschnitt (272) umfasst, wobei der Sitzabschnitt an dem Trägerrahmenbauteil (260) befestigt ist, wobei der Rückenlehnenabschnitt schwenkbar mit dem Sitzabschnitt verbunden ist und wobei der Rückenlehnenabschnitt schwenkbar mit dem hinteren Kantenabschnitt der flexiblen Wand verbunden ist, oder
ein Bett (300), das einen horizontalen Liegeabschnitt umfasst, wobei der Liegeabschnitt an dem Trägerrahmenbauteil befestigt ist und wobei der Liegeabschnitt schwenkbar mit der hinteren Kante der flexiblen Wand verbunden ist, oder
ein Tisch (330), der einen horizontalen Tischabschnitt (332) umfasst, wobei der Tischabschnitt an dem Trägerrahmenbauteil (320) befestigt ist.

9. Straßenfahrzeug nach einem der vorhergehenden Ansprüche, wobei das Mobiliarbauteil mindestens einen Stützträger (278; 308) umfasst, der eingerichtet ist, das Mobiliarbauteil auf einer Bodenfläche des Fahrzeugs zu stützen, wobei der Stützträger schwenkbar mit dem Trägerrahmenbauteil (260; 290) in einem Abstand von einer imaginären Ebene durch eine der Führungsschienen verbunden ist.

10. Straßenfahrzeug nach Anspruch 9, wobei der Stützträger ferner schwenkbar mit dem hinteren Kantenabschnitt der flexiblen Wand verbunden ist.

11. Straßenfahrzeug nach einem der vorhergehenden Ansprüche, wobei das Trägerrahmenbauteil oder die flexible Wand mit einem Gewichtsausgleichsbauteil verbunden ist, das mindestens einen Teil des Gewichts des Mobiliarbauteils ausgleicht.

12. Straßenfahrzeug nach Anspruch 11, wobei das Gewichtsausgleichsbauteil ein Federbauteil umfasst, wobei das Federbauteil insbesondere mindestens eines der folgenden Elemente umfasst: eine Konstantkraftfeder (380), eine Drehfeder (350), eine linearen Feder (360) oder eine Gasfeder (370).

13. Straßenfahrzeug nach Anspruch 12, wobei die Verbindung zwischen dem Trägerrahmenbauteil oder der flexiblen Wand und dem Federbauteil durch ein Kabel (352; 362; 372) gebildet ist.

14. Straßenfahrzeug nach einem der vorhergehenden Ansprüche, wobei das Trägerrahmenbauteil oder die flexible Wand mit einem Motorantrieb, insbesondere einem Elektromotorantrieb, ganz besonders einer elektrischen Winde (390), zum Bewegen der flexiblen Wand zwischen ihrer ersten Position und ihrer zweiten Position verbunden ist.

15. Unterteilende Vorrichtung (130; 250; 280; 310) für ein Straßenfahrzeug (100), wie etwa einen Kleintransporter, LCV (light commercial vehicle), wobei die unterteilende Vorrichtung Folgendes umfasst:
mindestens zwei beabstandete und parallele Führungsschienen (132; 252; 282; 312);
eine flexible Wand (136; 170; 180; 190; 200; 210; 220; 254; 284; 314), die zwischen den Führungsschienen verläuft, wobei die flexible Wand zwei sich gegenüberliegende Seitenkanten (176) und einen hinteren Kantenabschnitt (254a; 284a; 314a) aufweist, wobei die flexible Wand an jeder ihrer Seitenkanten mit Führungselementen (138; 178; 226; 258; 262; 288; 318) versehen ist, wobei die Führungselemente in die Führungsschienen eingreifen, um die flexible Wand den Führungsschienen entlang beweglich zu führen,
wobei jede Führungsschiene eine im Wesentlichen umgekehrte U-Form aufweist, die einen vorderen Führungsschienenabschnitt (132a; 252a; 282a; 312a), einen hinteren Führungsschienenabschnitt (132b; 252b; 282b; 312b) und einen Führungsschienenverbindungsabschnitt (132c; 252c; 282c; 312c), der ein oberes Ende des vorderen Führungsschienenabschnitts mit einem oberen Ende des hinteren Führungsschienenabschnitts verbindet, ausbildet;
wobei die flexible Wand zwischen einer ersten Position und einer zweiten Position beweglich ist;
wobei die flexible Wand in ihrer ersten Position mindestens zwischen den vorderen Führungsschienenabschnitten der Führungsschienen verläuft;
wobei die flexible Wand in ihrer zweiten Position mindestens zwischen mindestens einem Teil der hinteren Führungsschienenabschnitte der Führungsschienen verläuft; und
wobei die unterteilende Vorrichtung ferner ein Mobiliarbauteil mit einem Trägerrahmenbauteil (260; 290; 320) umfasst, wobei das Trägerrahmenbauteil zwischen den Führungsschienen verläuft, wobei das Trägerrahmenbauteil an jeder Seite davon mit mindestens zwei beabstandeten Rahmenführungselementen (262; 292; 322) versehen ist, wobei die Rahmenführungselemente an jeder Seite die entsprechende Führungsschiene angreifen, um das Trägerrahmenbauteil den Führungsschienen entlang beweglich zu führen, wobei das Trägerrahmenbauteil mit dem hinteren Kantenabschnitt der flexiblen Wand verbunden ist, damit dieses zusammen mit der flexiblen Wand den Führungsschienen entlang bewegt werden kann, und wobei das Mobiliarbauteil dem Führungsschienenverbindungsabschnitt entlang in der ersten Position der flexiblen Wand verstaut ist.

## Revendications

1. Véhicule routier (100), tel qu'un véhicule utilitaire léger, VUL, comprenant un dispositif de compartimentage (130 ; 250 ; 280 ; 310), le dispositif de compartimentage comprenant:
au moins deux rails de guidage (135 ; 252 ; 282 ; 312) espacés et parallèles;
une paroi flexible (136 ; 170 ; 180 ; 190 ; 200 ; 210 ; 220 ; 254 ; 284 ; 314) s'étendant entre les rails de guidage, la paroi flexible ayant deux bords latéraux (176) opposés et une partie de bord arrière (254a ; 284a ; 314a), la paroi flexible étant pourvue d'éléments de guidage (138 ; 178 ; 226 ; 258 ; 262 ; 288 ; 318) à chaque bord latéral de celle-ci, les éléments de guidage engageant les rails de guidage pour guider de manière mobile la paroi flexible le long des rails de guidage,
dans lequel chaque rail de guidage a une forme sensiblement en U inversé formant une partie avant (132a ; 252a ; 282a ; 312a) de rail de guidage, une partie arrière (132b ; 252b ; 282b ; 312b) de rail de guidage et une partie de connexion (132c ; 252c ; 282c ; 312c) de rail de guidage reliant une extrémité supérieure de la partie avant de rail de guidage à une extrémité supérieure de la partie arrière de rail de guidage;
dans lequel la paroi flexible est mobile entre une première position et une deuxième position;
dans lequel la paroi flexible s'étend, dans la première position de celle-ci, au moins entre les parties avant de rail de guidage des rails de guidage;
dans lequel la paroi flexible s'étend, dans la deuxième position de celle-ci, au moins entre au moins une partie des parties arrière de rail de guidage des rails de guidage; et
dans lequel le véhicule routier comprend en outre un élément de meuble ayant un élément (260 ; 290 ; 320) de châssis de support, l'élément de châssis de support s'étendant entre les rails de guidage, l'élément de châssis de support étant pourvu de chaque côté de celui-ci d'au moins deux éléments de guidage de châssis (262 ; 292 ; 322) espacés, les éléments de guidage de châssis de chaque côté engageant le rail de guidage correspondant pour guider de manière mobile l'élément de châssis de support le long des rails de guidage, dans lequel l'élément de châssis de support est relié à la partie de bord arrière de la paroi flexible pour être mobile le long des rails de guidage conjointement avec la paroi flexible, et dans lequel l'élément de meuble est rangé le long de la partie de connexion de rail de guidage dans la première position de la paroi flexible.

2. Véhicule routier selon la revendication 1, comprenant en outre une porte latérale (110) sur un côté du véhicule pour ouvrir et fermer une ouverture de porte (112) ayant un bord gauche (112b) d'ouverture de porte, un bord droit (112a) d'ouverture de porte droit, un bord supérieur (112c) d'ouverture de porte et un bord inférieur (112d) d'ouverture de porte, dans lequel l'un des rails de guidage s'étend le long du bord gauche d'ouverture de porte, du bord supérieur d'ouverture de porte et du bord droit d'ouverture de porte, et ne s'étend pas le long du bord inférieur d'ouverture de porte.

3. Véhicule routier selon la revendication 1 ou 2, dans lequel la paroi flexible comprend une pluralité d'éléments de paroi (172 ; 182 ; 192 ; 202 ; 222 ; 256 ; 286 ; 316) allongés, chaque élément de paroi s'étendant entre les rails de guidage et ayant deux bords longitudinaux opposés, dans lequel un ou plusieurs éléments de charnière (175 ; 184 ; 224) relient des bords longitudinaux respectifs d'éléments de paroi adjacents.

4. Véhicule routier selon la revendication 3, dans lequel au moins l'un des éléments de paroi (182) chevauche partiellement un élément de paroi adjacent.

5. Véhicule routier selon la revendication 3 ou 4, dans lequel au moins l'un des éléments de paroi est courbé sur sa longueur et/ou courbé sur sa largeur.

6. Véhicule routier selon la revendication 1 ou 2, dans lequel la paroi flexible est constituée de ou comprend une membrane de matériau flexible.

7. Véhicule routier selon l'une quelconque des revendications précédentes, dans lequel les rails de guidage comprennent chacun un élément profilé, et dans lequel:
l'élément profilé (140) a une section transversale sensiblement en forme de C, dans lequel les éléments de guidage comprennent des roues (142a) de guidage pouvant tourner librement et mobiles dans le rail de guidage correspondant, ou
l'élément profilé (150) a une section transversale sensiblement en forme de C, dans lequel les éléments de guidage comprennent des éléments (152a) coulissants internes et mobiles dans le rail de guidage correspondant, ou
les éléments de guidage comprennent des éléments (162a) coulissants externes s'engageant au moins en partie autour de l'élément profilé (160) correspondant.

8. Véhicule routier selon l'une quelconque des revendications précédentes, dans lequel l'élément de meuble est:
un siège (270) comprenant une partie de dossier (274) et une partie de siège (272), dans lequel la partie de siège est fixée à l'élément de châssis de support (260), dans lequel la partie de dossier est reliée de manière articulée à la partie de siège, et dans lequel la partie de dossier est reliée de manière articulée à la partie de bord arrière de la paroi flexible, ou
un lit (300) comprenant une partie de repos horizontale, dans lequel la partie de repos est fixée à l'élément de châssis de support, et dans lequel la partie de repos est reliée de manière articulée au bord arrière de la paroi flexible, ou
une table (330) comprenant une partie de table horizontale (332), dans laquelle la partie de table est fixée à l'élément (320) de châssis de support.

9. Véhicule routier selon l'une quelconque des revendications précédentes, dans lequel l'élément de meuble comprend au moins une poutre de support (278 ; 308) configurée pour supporter l'élément de meuble sur une surface inférieure du véhicule, dans lequel la poutre de support est reliée de manière articulée à l'élément (260 ; 290) de châssis de support à une distance d'un plan imaginaire à travers l'un des rails de guidage.

10. Véhicule routier selon la revendication 9, dans lequel la poutre de support est en outre reliée de manière articulée à la partie de bord arrière de la paroi flexible.

11. Véhicule routier selon l'une quelconque des revendications précédentes, dans lequel l'élément de châssis de support ou la paroi flexible est relié à un élément de compensation de poids compensant au moins une partie du poids de l'élément de meuble.

12. Véhicule routier selon la revendication 11, dans lequel l'élément de compensation de poids comprend un élément à ressort, dans lequel l'élément à ressort comprend en particulier au moins l'un parmi un ressort à force constante (380), un ressort de torsion (350), un ressort linéaire (360) et un ressort à gaz (370).

13. Véhicule routier selon la revendication 12, dans lequel la connexion entre l'élément de châssis de support ou la paroi flexible, et l'élément à ressort est constitué d'un câble (352 ; 362 ; 372).

14. Véhicule routier selon l'une quelconque des revendications précédentes, dans lequel l'élément de châssis de support ou la paroi flexible est relié à un moteur d'entraînement, en particulier un moteur électrique d'entraînement, plus en particulier un treuil électrique (390), pour déplacer la paroi flexible entre la première position et la deuxième position de celle-ci.

15. Dispositif de compartimentage (130 ; 250 ; 280 ; 310) pour un véhicule routier (100), tel qu'un véhicule utilitaire léger, VUL, le dispositif de compartimentage comprenant:
au moins deux rails de guidage (135 ; 252 ; 282 ; 312) espacés et parallèles;
une paroi flexible (136 ; 170 ; 180 ; 190 ; 200 ; 210 ; 220 ; 254 ; 284 ; 314) s'étendant entre les rails de guidage, la paroi flexible ayant deux bords latéraux (176) opposés et une partie de bord arrière (254a ; 284a ; 314a), la paroi flexible étant pourvue d'éléments de guidage (138 ; 178 ; 226 ; 258 ; 262 ; 288 ; 318) à chaque bord latéral de celle-ci, les éléments de guidage engageant les rails de guidage pour guider de manière mobile la paroi flexible le long des rails de guidage,
dans lequel chaque rail de guidage a une forme sensiblement en U inversé formant une partie avant (132a ; 252a ; 282a ; 312a) de rail de guidage, une partie arrière (132b ; 252b ; 282b ; 312b) de rail de guidage et une partie de connexion (132c ; 252c ; 282c ; 312c) de rail de guidage reliant une extrémité supérieure de la partie avant de rail de guidage à une extrémité supérieure de la partie arrière de rail de guidage;
dans lequel la paroi flexible est mobile entre une première position et une deuxième position;
dans lequel la paroi flexible s'étend, dans la première position de celle-ci, au moins entre les parties avant de rail de guidage des rails de guidage;
dans lequel la paroi flexible s'étend, dans la deuxième position de celle-ci, au moins entre au moins une partie des parties arrière de rail de guidage des rails de guidage; et
dans lequel le dispositif de compartimentage comprend en outre un élément de meuble ayant un élément (260 ; 290 ; 320) de châssis de support, l'élément de châssis de support s'étendant entre les rails de guidage, l'élément de châssis de support étant pourvu de chaque côté de celui-ci d'au moins deux éléments de guidage de châssis (262 ; 292 ; 322) espacés, les éléments de guidage de châssis de chaque côté engageant le rail de guidage correspondant pour guider de manière mobile l'élément de châssis de support le long des rails de guidage, dans lequel l'élément de châssis de support est relié à la partie de bord arrière de la paroi flexible pour être mobile le long des rails de guidage conjointement avec la paroi flexible, et dans lequel l'élément de meuble est rangé le long de la partie de connexion de rail de guidage dans la première position de la paroi flexible.
